# EUROPÄISCHE PATENTSCHRIFT

(11) **EP 3 925 429 B1**
(45) Veröffentlichungstag und Bekanntmachung des Hinweises auf die Patenterteilung: **25.12.2024**
(21) Anmeldenummer: 21170342.6
(22) Anmeldetag: 26.04.2021
(51) Int. Cl.: A01D 43/10

(54) **FELDHÄCKSLER**
FORAGE HARVESTER
RAMASSEUSE-HACHEUSE

(30) Priorität: 17.06.2020 DE 102020115944
(43) Veröffentlichungstag der Anmeldung: 22.12.2021
(73) Patentinhaber: CLAAS Selbstfahrende Erntemaschinen GmbH, 33428 Harsewinkel (DE)
(72) Erfinder: Look, Stefan, 48231 Warendorf (DE); Rathjens, Jochen, 21635 Jork (DE)
(74) Vertreter: CLAAS Gruppe

(56) Entgegenhaltungen:
- EP-A1- 1 034 696
- EP-A1- 1 961 288
- DE-A1- 102018 208 791
- US-A1- 2005 238 271
- US-A1- 2006 185 337

## Beschreibung

Die vorliegende Erfindung betrifft einen Feldhäcksler.

Ein Feldhäcksler hat typischerweise ein Fahrgestell mit sich in Längsrichtung des Feldhäckslers erstreckenden und durch in Querrichtung verlaufende Träger miteinander verbundenen Rahmenteilen, an dem eine Vorderachse, Hinterräder, ein Motor, ein Häckselwerk etc. montiert sind. Ein derartiger Feldhäcksler ist in der US2006185337 offenbart.

Hauptbestandteil des Häckselwerks ist eine mit Messern besetzte Häckseltrommel. Indem ein Strom von Erntegut auf die Häckseltrommel zu gefördert wird, während die Häckseltrommel rotiert, wird das Erntegut in Stücke geschnitten. Um trotz wechselnden Widerstands durch das Erntegut gleichmäßig zu rotieren, muss die Häckseltrommel ein großes Trägheitsmoment und dementsprechend großen Durchmesser und hohe Masse aufweisen; dies und die im Betrieb stark schwankenden Schneidkräfte an den Messern machen eine kräftige Welle und dementsprechend große, hoch belastbare Lager erforderlich. Wenn Lagerspiel Rüttelbewegungen der Häckseltrommel ermöglicht, beeinträchtigt dies die Schnittqualität, außerdem führt es zu erhöhtem Verschleiß der Lager, was wiederum das Lagerspiel vergrößert.

Eine Aufgabe der Erfindung ist, einen Feldhäcksler zu schaffen, der eine verschleißarme Lagerung und über lange Zeit präzise Führung der Bewegung der Häckseltrommel ermöglicht.

Die Aufgabe wird gelöst, indem bei einem Feldhäcksler mit einer Häckseltrommelbaugruppe und zwei Rahmenteilen, zwischen denen die Häckseltrommelbaugruppe drehbar aufgehängt ist, wobei die Häckseltrommelbaugruppe an beiden Rahmenteilen durch jeweils ein eine Drehachse definierendes Klemmlager gehalten ist, Berührungspunkte zwischen einem rahmenteilseitigen Element und einem baugruppenseitigen Element des Klemmlagers auf einer auf die Drehachse zentrierten Kugelfläche liegen. Durch diesen Aufbau legt nicht jedes Klemmlager für sich die Drehachse fest, sondern jedes Klemmlager definiert nur einen einzigen Punkt, den Mittelpunkt der Kugelfläche, als einen Punkt, durch den die Drehachse verlaufen muss. So kann die Häckseltrommelbaugruppe frei von innerer Spannung an den Rahmenteilen montiert werden und relativ zu diesen reibungs- und verschleißarm rotieren.

Um eine dauerhaft sichere Klemmung zu gewährleisten, sollten beide Elemente des Klemmlagers Kugelflächen aufweisen, die dadurch, dass sie komplementär zueinander geformt sind, einander großflächig berühren.

Das baugruppenseitige Element des Klemmlagers uts typischerweise ein Ring ist, durch den sich eine Welle der Häckseltrommelbaugruppe erstreckt, und bei dem die sphärische Oberfläche eine Außenumfangsfläche ist.

Um einen Ausbau der Häckseltrommelbaugruppe zu ermöglichen, umfasst das rahmenteilseitige Element zwei Teile, auf die die sphärische Oberfläche des rahmenteilseitigen Elements verteilt ist.

Insbesondere sollte ein unteres der zwei Teile fester Bestandteil eines der Rahmenteile sein, um die Häckseltrommelbaugruppe auch dann stabil unterstützen zu können, wenn das obere der zwei Teile gelöst ist.

Um die zwei Teile zusammenzuziehen und das baugruppenseitige Element festzuklemmen, genügt eine Spannschraube. Wenn diese die Teile auf einer Seite der Welle zusammenzieht, kann auf der gegenüberliegenden Seite wischen den Teilen eine Gelenkverbindung vorgesehen sein.

Einer bevorzugten Ausgestaltung zufolge umfasst die Häckseltrommelbaugruppe eine in den Klemmlagern drehbar aufgenommene Welle und einen mit der Welle drehfest verbundenen Adapter für einen Erntevorsatz. Indem die Welle und mit ihr der Adapter gedreht wird, kann die Höhe über dem Boden des Erntevorsatzes angepasst werden.

Die Häckseltrommel ist vorzugsweise ihrerseits drehbar an der Welle gelagert. Da die Welle somit mur kleine, langsame Drehungen ausführen muss, kann sie in dem Klemmlager gleitgelagert sein.

Um die Drehung der Welle (und damit die Höhenverstellung des Adapters) anzutreiben, kann ein hydraulisches Stellglied zwischen den Rahmenteilen und der Häckseltrommelbaugruppe vorgesehen sein.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Darstellung eines Feldhäckslers;
- Fig. 2: eine Ansicht eines Rahmens des Feldhäckslers und einer in dem Rahmen montierten Häckseltrommelbaugruppe;
- Fig. 3: ein geschlossenes Klemmlager;
- Fig. 4: Teile des Klemmlagers;
- Fig. 5: einen axialen Schnitt durch das Klemmlager; und
- Fig. 6: eine Ansicht des Rahmens und eines Gehäuses der Häckseltrommelbaugruppe schräg von unten.

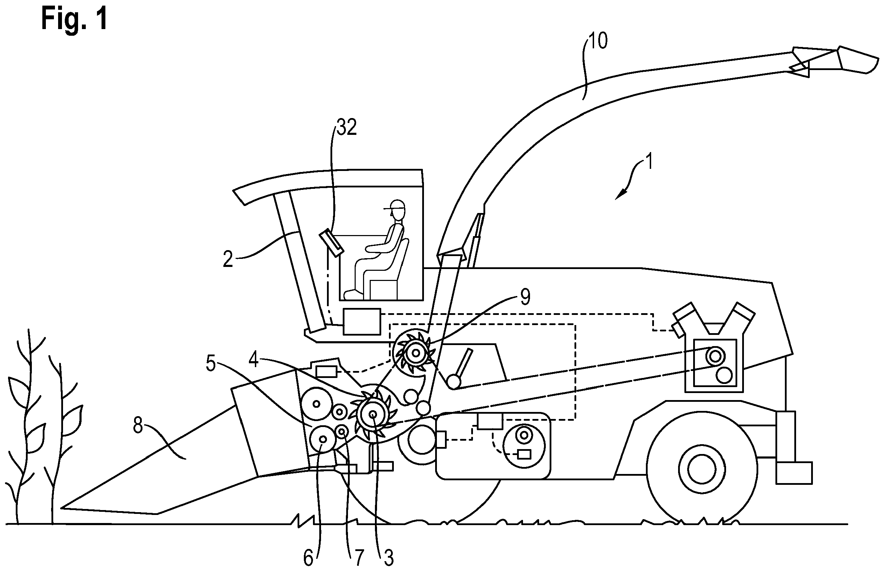

Fig. 1 zeigt in schematischer Darstellung einen Feldhäcksler 1. Die Karosserie des Feldhäckslers 1 ist in ihrem Vorderteil, unterhalb einer Fahrerkabine 2, aufgeschnitten dargestellt, um interne, Erntegut verarbeitende Baugruppen des Feldhäckslers zeigen zu können. Eine dieser Baugruppen ist eine Häckseltrommelbaugruppe mit einer um eine sich in Fahrzeugquerrichtung erstreckende Achse 3 rotierenden Häckseltrommel 4.

Der Häckseltrommelbaugruppe ist eine Fördereinrichtung 5 für Erntegutvorgelagert. Die Fördereinrichtung 5 umfasst mehrere Walzenpaare 6, 7, die jeweils einen Spalt begrenzen und gegensinnig drehangetrieben sind, um das durch den Spalt hindurch laufende Erntegut der Häckseltrommel 4 zuzuführen.

Die Fördereinrichtung 5 trägt wiederum einen in Anpassung an das zu bergende Pflanzenmaterial austauschbaren Erntevorsatz 6.

In der Häckseltrommelbaugruppe zerkleinertes Erntegut wird einem Nachbeschleuniger 9 zugeführt, der dem zerkleinerten Erntegut die nötige Geschwindigkeit verleiht, um einen Auswurfkrümmer 10 zu durchlaufen und in ein (nicht dargestelltes) Begleitfahrzeug übergeladen zu werden.

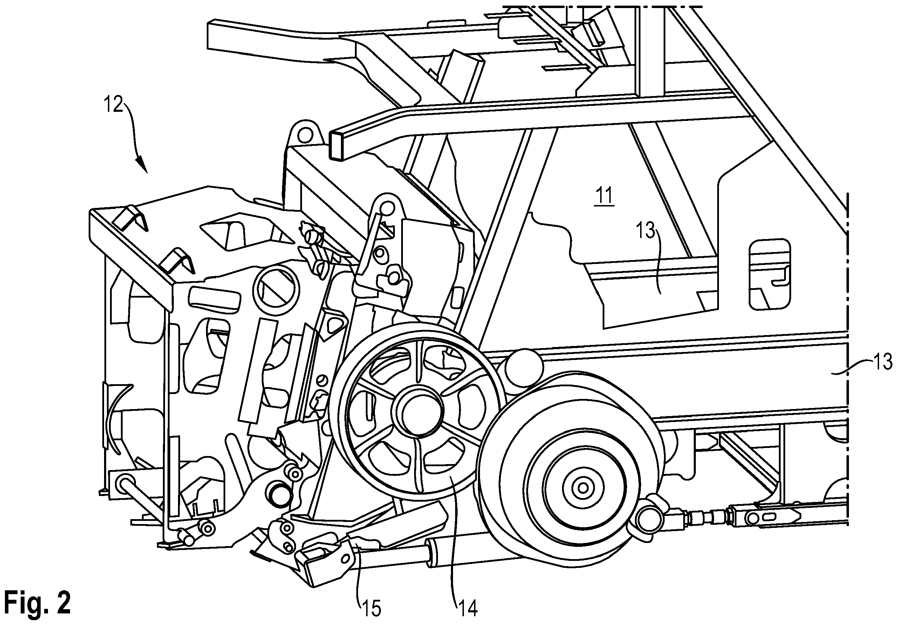

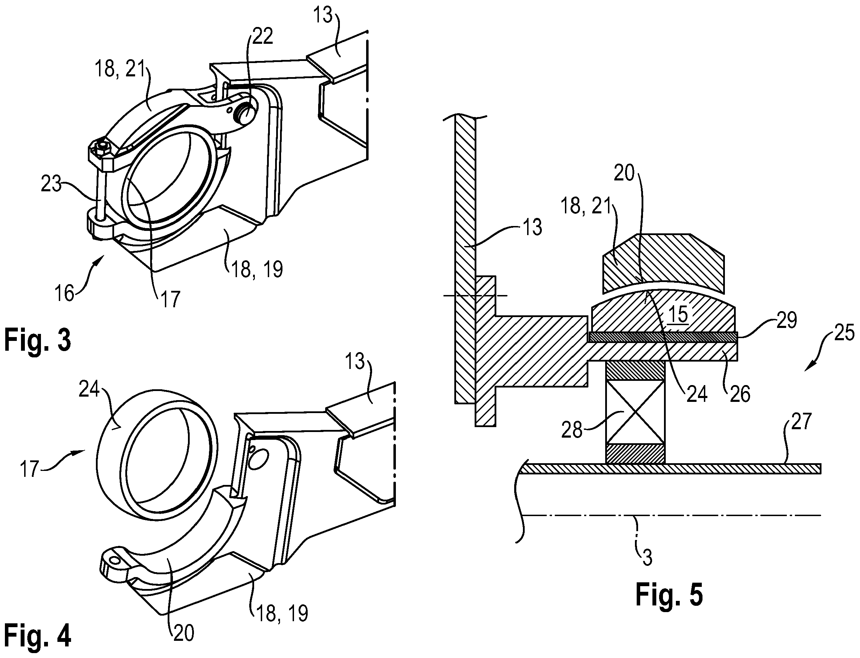

Fig. 2 und 3 zeigt einen vorderen Teil eines Rahmens 11 des Feldhäckslers 1 und der darin montierten Häckseltrommelbaugruppe 12 in einer perspektivischen Ansicht schräg von vorn. Der Rahmen 11 umfasst zwei sich im Wesentlichen horizontal in Fahrzeuglängsrichtung erstreckende Rahmenteile 13, z.B. in Form von T- oder Doppel-T-Profilen, die untereinander durch (in der Fig. nicht sichtbare) Querträger starr verbunden sind und an denen eine Vorderachse sowie lenkbare Hinterräder des Feldhäckslers 1 aufgehängt sind.

Das vordere Ende der Rahmenteile 13 ist in Fig. 2 hinter einer die Drehung der Häckseltrommel antreibenden Riemenscheibe 14 bzw. einem die Häckseltrommel umgebenden Gehäuse 15 verborgen.

Fig. 3 zeigt dieses vordere Ende in einer Detailansicht. Das Rahmenteil 13 endet in einem Klemmlager 16, das vorgesehen ist, um eine Welle der Häckseltrommelbaugruppe 12 aufzunehmen. Von der Häckseltrommelbaugruppe 12 ist nur ein ringförmiges Element 17 gezeigt, das vorgesehen ist, um eine Welle aufzunehmen, die - wie nachfolgend noch genauer beschrieben wird - die Riemenscheibe 14 mit dem Gehäuse 15 und der Häckseltrommel 4 verbindet.

Ein rahmenteilseitiges Element 18 des Klemmlagers 16 umfasst einen mit dem Rahmenteil 13 fest verbundenes Teil 19 in Form eines Ringsektors, dessen Konkavität 20 (siehe auch Fig. 4) nach oben gewandt ist, so dass die Häckseltrommelbaugruppe 12 während des Einbaus im oder Ausbaus aus dem Feldhäcksler 1 stabil gelagert werden kann, indem das ringförmige Element 17 in die Konkavität 20 eingelegt wird.

Ein zweites ringsektorförmiges Teil 21 des rahmenteilseitigen Elements 18 ist mit dem Rahmenteil 13 über ein Gelenk 22 verbunden. Die vorderen Spitzen der Teile 19, 21 weisen jeweils eine Bohrung auf, in denen eine Spannschraube 23 montierbar ist. Um die Häckseltrommelbaugruppe 12 in die Konkavität 20 einlegen oder daraus entnehmen zu können, wird die Spannschraube 23 entfernt und das Teil 21 hochgeklappt.

Wie in Fig. 4 zu erkennen, ist die Konkavität 20 Teil einer Kugelfläche, genauso wie die Außenumfangsfläche 24 des ringförmigen Elements 17. Das ringförmige Element 17 ist daher, wenn es in die Konkavität 20 eingelegt ist, um zwei zur Welle orthogonale Achsen schwenkbar. Wenn die Häckseltrommelbaugruppe 12 in die beiden Teile 19 eingelegt wird, kann sich die Ausrichtung ihrer Achse frei an eventuelle Toleranzen in Positionierung und Ausrichtung der Teile 19 anpassen, so dass, wenn die Spannschraube 23 festgezogen und das ringförmige Element 17 zwischen den Teilen 19, 21 geklemmt wird, daraus keine internen Spannungen in der Häckseltrommelbaugruppe 12 resultieren.

Die Kugelflächen der Konkavität 20 und der Außenumfangsfläche 24 haben jeweils gleiche Radien; außerdem kann das Teil 21 eine Konkavität mit demselben Radius aufweisen, so dass die Teile 19, 21 in festgezogenen Zustand großflächig an der Außenumfangsfläche 24 anliegen.

Fig. 5 zeigt einen axialen Schnitt eines der Klemmlager 16 und die darin aufgenommene Welle 25 der Häckseltrommelbaugruppe 12. Der Mittelpunkt der Kugelflächen der Konkavität 20 und der Außenumfangsfläche 24 liegen auf der Achse 3 der Welle 25. Die Welle 25 umfasst eine Hohlwelle 26 und eine konzentrisch in deren Innerem verlaufende innere Welle 27. Die innere Welle 27 trägt an einer Seite des Klemmlagers 16 die Riemenscheibe 14 und an der anderen die Häckseltrommel 4. Die Hohlwelle 26 trägt das Gehäuse 15. Ein Wälzlager 28 zwischen beiden stellt die Drehbarkeit von Hohlwelle 26 und innerer Welle 27 relativ zueinander sicher, so dass die Riemenscheibe 14 die Drehung der Häckseltrommel 4 antreiben kann, während das Gehäuse 15 in Ruhe bleibt. Ein Gleitlager 29 zwischen der Hohlwelle 26 und dem ringförmigen Element 17, im einfachsten Fall eine Schmierung zwischen der Außenfläche der Hohlwelle 26 und der Innenfläche des ringförmigen Elements 17, ermöglicht eine Drehung der Hohlwelle 26 und des Gehäuses 15 um die Achse 3 unabhängig von der Drehung der Häckseltrommel 4.

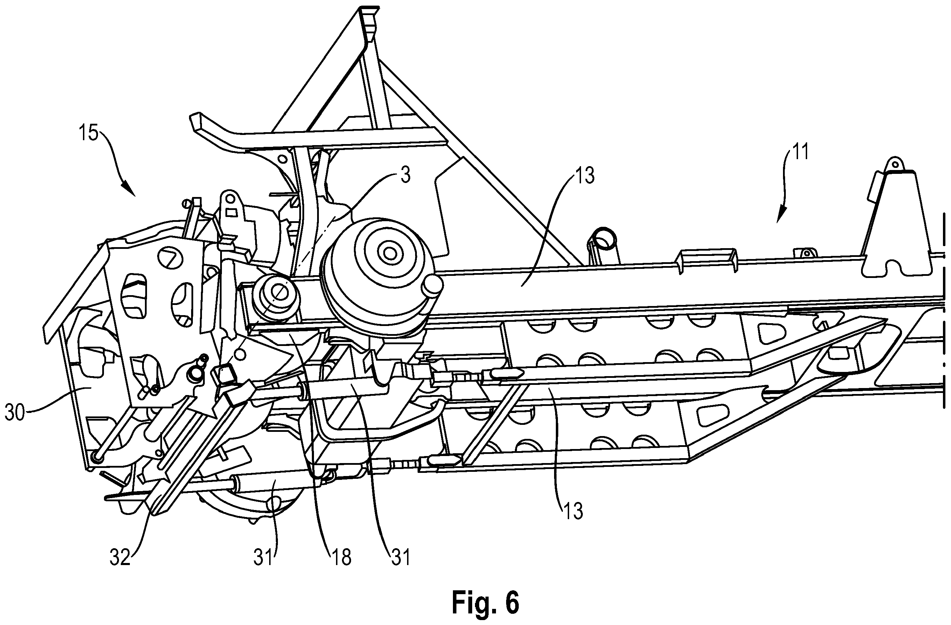

Fig. 6 zeigt eine Ansicht des Rahmens des Feldhäckslers 1 und des Gehäuses 15 der Häckseltrommelbaugruppe 12 schräg von unten. Ein viereckiger Adapter 30 an der Vorderseite des Gehäuses 15 ist vorgesehen, um daran den in dieser Figur nicht dargestellten Erntevorsatz 8 zu montieren oder um daran eine Hebemaschine zum Unterstützen von Ein- und Ausbau der Häckseltrommelbaugruppe 12 aus dem Feldhäcksler 1 anzukoppeln. Unter jedem der Rahmenteile 13 erstreckt sich ein hydraulisches Stellglied 31 in Fahrzeuglängsrichtung. Ein hinteres Ende jedes Stellglieds 31 ist mit dem Rahmen verbunden, die vorderen Enden greifen gemeinsam an einem Querbalken 32 des Gehäuses an. Indem die Stellglieder 31 gemeinsam ausfahren, schwenken sie das Gehäuse 15 um die Achse 3 und heben dadurch ggf. den an dem Adapters 30 montierten Erntevorsatz 8 an. Infolge der Schwenkbeweglichkeit der ringförmigen Elemente 17 in den rahmenteilseitigen Elementen 18 sind deren Innenseiten exakt miteinander fluchtend ausgerichtet, so dass sich die Hohlwelle 26 darin drehen kann, ohne dabei eine Biegebelastung zu erfahren. Dies gewährleistet eine leichte, verschleißarme Drehung nicht nur am Gleitlager 29, sondern auch am Wälzlager 28.

### Bezugszeichen

- 1: Feldhäcksler
- 2: Fahrerkabine
- 3: Achse
- 4: Häckseltrommel
- 5: Fördereinrichtung
- 6: Walzenpaar
- 7: Walzenpaar
- 8: Erntevorsatz
- 9: Nachbeschleuniger
- 10: Auswurfkrümmer
- 11: Rahmen
- 12: Häckseltrommelbaugruppe
- 13: Rahmenteil
- 14: Riemenscheibe
- 15: Gehäuse
- 16: Klemmlager
- 17: (ringförmiges) Element
- 18: (rahmenteilseitiges) Element
- 19: Teil von 18
- 20: Konkavität
- 21: Teil von 18
- 22: Gelenk
- 23: Spannschraube
- 24: Außenumfangsfläche
- 25: Welle
- 26: Hohlwelle
- 27: innere Welle
- 28: Wälzlager
- 29: Gleitlager
- 30: Adapter
- 31: Stellglied
- 32: Querbalken

## Patentansprüche

1. Feldhäcksler mit einer Häckseltrommelbaugruppe (12) und zwei Rahmenteilen (13), zwischen denen die Häckseltrommelbaugruppe (12) drehbar aufgehängt ist, wobei die Häckseltrommelbaugruppe (12) an beiden Rahmenteilen (13) durch jeweils ein eine Drehachse (3) definierendes Klemmlager (16) gehalten ist, **dadurch gekennzeichnet, dass** Berührungspunkte zwischen einem rahmenteilseitigen Element (18) und einem baugruppenseitigen Element (17) des Klemmlagers (16) auf einer auf die Drehachse (3) zentrierten Kugelfläche liegen, wobei das rahmenteilseitige Element (18) zwei Teile (19, 21) umfasst und die sphärische Oberfläche (20) auf beide Teile (19, 21) verteilt ist, wobei wenigstens eine Spannschraube (23) zum Aufeinanderzuziehen der zwei Teile (19, 21) vorgesehen ist.

2. Feldhäcksler nach Anspruch 1, **dadurch gekennzeichnet, dass** die Berührungspunkte auf zueinander komplementären sphärischen Oberflächen (20, 24) der Elemente (17, 18) liegen.

3. Feldhäcksler nach Anspruch 1 oder 2, **dadurch gekennzeichnet, dass** das baugruppenseitige Element (17) ein Ring ist, durch den sich eine Welle (25) der Häckseltrommelbaugruppe (12) erstreckt, und dass die sphärische Oberfläche eine Außenumfangsfläche (24) des Rings ist.

4. Feldhäcksler nach einem der vorhergehenden Ansprüche, **dadurch gekennzeichnet, dass** die Häckseltrommelbaugruppe (12) eine in den Klemmlagern (16) drehbar aufgenommene Welle (26) und einen mit der Welle (26) drehfest verbundenen Adapter (30) für einen Erntevorsatz (6) umfasst.

5. Feldhäcksler nach Anspruch 4, **dadurch gekennzeichnet, dass** die Häckseltrommelbaugruppe (12) eine an der Welle (26) drehbar gelagerte Häckseltrommel (4) umfasst.

6. Feldhäcksler nach Anspruch 4 oder 5, **gekennzeichnet durch** wenigstens ein hydraulisches Stellglied (31) zum Antreiben einer Schwenkbewegung des Adapters (30) um die Drehachse (3).

## Claims

1. A forage harvester with a chopping drum assembly (12) and two frame parts (13), between which the chopping drum assembly (12) is rotatably suspended, wherein the chopping drum assembly (12) is retained on both frame parts (13) by a respective clamp bearing (16) defining an axis of rotation (3), **characterized in that** contact points between an element (18) on the frame part side and an element (17) on the assembly side of the clamp bearing (16) lie on a spherical surface centred on the axis of rotation (3), wherein the element (18) on the frame part side comprises two parts (19, 21) and the spherical surface (20) is divided over both parts (19, 21), wherein at least one tensioning screw (23) is provided in order to draw the two parts (19, 21) together.

2. The forage harvester according to claim 1, **characterized in that** the contact points lie on mutually complementary spherical surfaces (20, 24) of the elements (17, 18).

3. The forage harvester according to claim 1 or claim 2, **characterized in that** the element (17) on the assembly side is a ring through which a shaft (25) of the chopping drum assembly (12) extends, and **in that** the spherical surface is an outer circumferential surface (24) of the ring.

4. The forage harvester according to one of the preceding claims, **characterized in that** the chopping drum assembly (12) comprises a shaft (26) which is rotatably received in the clamp bearings (16) and an adapter (30) for a front harvester attachment (6) which is connected to the shaft (26) in a manner which is fixed against rotation.

5. The forage harvester according to claim 4, **characterized in that** the chopping drum assembly (12) comprises a chopping drum (4) which is rotatably mounted on the shaft (26).

6. The forage harvester according to claim 4 or claim 5, **characterized by** at least one hydraulic actuator (31) for actuating a pivoting movement of the adapter (30) about the axis of rotation (3).

## Revendications

1. Récolteuse-hacheuse-chargeuse comprenant un ensemble de tambour hacheur (12) et deux éléments de châssis (13) entre lesquels l'ensemble de tambour hacheur (12) est suspendu avec possibilité de rotation, l'ensemble de tambour hacheur (12) étant maintenu sur les deux éléments de châssis (13) respectivement par un palier de serrage (16) définissant un axe de rotation (3), **caractérisée en ce que** des points de contact entre un élément (18) côté élément de châssis et un élément (17) côté ensemble du palier de serrage (16) se situent sur une surface sphérique centrée sur l'axe de rotation (3), l'élément (18) côté élément de châssis comportant deux parties (19, 21), et la surface sphérique (20) étant répartie sur les deux parties (19, 21), sachant qu'au moins une vis de serrage (23) est prévue pour le serrage des deux parties (19, 21) l'une en direction de l'autre.

2. Récolteuse-hacheuse-chargeuse selon la revendication 1, **caractérisée en ce que** les points de contact se situent sur des surfaces sphériques (20, 24) mutuellement complémentaires des éléments (17, 18).

3. Récolteuse-hacheuse-chargeuse selon la revendication 1 ou 2, **caractérisée en ce que** l'élément (17) côté ensemble est une bague à travers laquelle s'étend un arbre (25) de l'ensemble de tambour hacheur (12), et **en ce que** la surface sphérique est une surface périphérique extérieure (24) de la bague.

4. Récolteuse-hacheuse-chargeuse selon une des revendications précédentes, **caractérisée en ce que** l'ensemble de tambour hacheur (12) comprend un arbre (26), monté tournant dans les paliers de serrage (16), et un adaptateur (30), relié de manière solidaire en rotation à l'arbre (26), pour un outil frontal de récolte (6).

5. Récolteuse-hacheuse-chargeuse selon la revendication 4, **caractérisée en ce que** l'ensemble de tambour hacheur (12) comprend un tambour hacheur (4) qui est monté avec possibilité de rotation sur l'arbre (26).

6. Récolteuse-hacheuse-chargeuse selon la revendication 4 ou 5, **caractérisée en ce qu'**elle présente au moins un organe de réglage (31) hydraulique destiné à l'entraînement d'un mouvement pivotant de l'adaptateur (30) autour de l'axe de rotation (3).
